# FASCICULE DE BREVET EUROPEEN

(11) **EP 0 604 244 B1**
(45) Date de publication et mention de la délivrance du brevet: **02.05.1997**
(21) Numéro de dépôt: 93402640.2
(22) Date de dépôt: 27.10.1993
(51) Int. Cl.: E04B 1/26, E06B 3/96, F16B 7/04

(54) **Assemblage pour la réalisation d'ossatures porteuses ou autoportées de constructions annexes ou intégrées**
Anordnung zur Herstellung von tragenden oder selbsttragenden Konstruktionen, welche an- oder eingebaut sind
Assembly for the formation of load-bearing or selfsupporting frameworks of annexed or integral structures

(30) Priorité: 21.12.1992 FR 9215335
(43) Date de publication de la demande: 29.06.1994
(73) Titulaire: X 2 M FRANCE, F-44540 St. Mars la Jaille (FR)
(72) Inventeur: Pavageau, François, F-44100 Nantes (FR); Pavageau, Edith, née Wernert, F-44100 Nantes (FR)
(74) Mandataire: Dawidowicz, Armand

(56) Documents cités:
- EP-A- 0 496 482
- EP-A- 0 517 330
- FR-A- 2 563 293
- FR-A- 2 624 153
- FR-A- 2 667 011
- GB-A- 1 204 404

## Description

La présente invention concerne un assemblage pour la réalisation d'ossatures porteuses ou autoportées de constructions intégrées du type verrières, ou annexes du type vérandas ou analogues, au moyen d'éléments se présentant sous forme de poutres creuses renforcées.

De nombreuses constructions légères, telles que des vérandas, jardins d'hiver, appentis, verrières, puits de jour ou autres, réalisées à partir d'assemblage de profilés métalliques, en alliage léger, tel que de l'aluminium, sont bien connues. Cependant, de telles structures, généralement trop légères, ne peuvent supporter des toitures traditionnelles. Il a donc également été développé des ossatures réalisées en particulier en bois de manière à disposer d'éléments présentant une section suffisante pour assurer le support de la charge. Cependant, de telles structures présentent l'inconvénient d'utiliser, pour leur liaison, des organes tels que des chevilles, tenons, mortaises, mi-bois, embrèvements ou enfourchements qui exigent d'une part une préparation préalable en atelier avec un ajustage complémentaire des éléments sur place, d'autre part un montage et une adaptation des pièces qui nécessitent la technique d'un menuisier et le savoir propre à ce dernier. De ce fait, une industrialisation d'un tel type d'ossature est impensable.

Pour remédier à cet inconvénient, diverses ossatures ont été élaborées. Ainsi, le brevet FR-A-2.624.153 décrit une structure de support pour constructions annexes constituée d'éléments en forme de poutres creuses en bois généralement réalisées en lamellé-collé, chaque poutre comportant intérieurement une partie centrale évidée et sur ses surfaces externes au moins une rainure longitudinale adaptée à recevoir le talon d'un organe de liaison réunissant un élément à un autre de manière à former un angle prédéterminé.

Un tel type de structure ne répond que partiellement au problème car le fait de travailler avec des organes de liaison venant directement pénétrer dans la poutre de bois entraîne des problèmes de solidité dans le temps ainsi que des problèmes esthétiques.

Une autre structure se présentant sous forme de poutres creuses en lamellé-collé et comportant une âme de raidissement intérieure est décrite dans le brevet FR-A-2.667.011. Dans ce brevet, les moyens de connexion de deux poutres entre elles sont constitués par des équerres fixées à l'intérieur de l'âme de raidissement desdites poutres. De ce fait, on limite de manière importante les possibilités de construction et de réalisation d'une ossature avec de tels organes de liaison.

Le but de la présente invention est donc de proposer un assemblage qui permet de pallier les inconvénients précités en permettant de concevoir et d'utiliser des structures mixtes, tout en évitant les opérations usuelles d'ajustage final des parties en bois qui sont au contraire aménagées pour s'adapter directement à d'autres éléments également en bois ou métalliques grâce à des organes de liaison dont la mise en oeuvre n'exige aucune opération de rectification particulière.

A cet effet, l'invention a pour objet un assemblage pour la réalisation d'ossatures porteuses ou autoportées de constructions intégrées, du type verrières ou annexes, telles que vérandas ou analogues, au moyen d'éléments se présentant sous forme de poutres creuses dont la partie évidée est remplie au moins partiellement au moyen d'une âme de raidissement obtenue par au moins un profilé métallique creux s'étendant à l'intérieur de cet élément essentiellement sur toute sa longueur, chaque élément étant assemblé à un autre au moyen d'un organe de liaison, caractérisé en ce que ledit organe de liaison comprend un premier élément d'assemblage apte à être inséré coaxialement puis fixé dans l'âme de raidissement d'un premier élément au moyen d'un premier organe d'immobilisation approprié, un organe de positionnement immobilisé sur, ou dans, un second élément au moyen d'un second organe d'immobilisation approprié qui traverse au moins une paroi du second élément et au moins une face de l'âme de raidissement dudit second élément, ledit organe de positionnement étant solidarisé à, ou articulé sur, le premier élément d'assemblage soit directement, soit au moyen d'une entretoise.

Selon une première forme de réalisation de l'invention, l'élément d'assemblage est constitué par un étrier, l'organe de positionnement est constitué par une douille et l'entretoise est constituée par une broche, l'ensemble étant immobilisé et monté solidaire par vissage et clavetage.

Selon une deuxième forme de réalisation de l'invention, l'élément d'assemblage affecte toujours la forme d'un étrier dont les branches sont solidarisées entre elles au moyen d'un organe de liaison approprié, l'organe de positionnement est une pièce en appui sur l'un des éléments formant poutre, cette pièce étant immobilisée sur ladite poutre au moyen d'une vis et comportant un second perçage permettant une liaison articulée directe avec l'élément d'assemblage, l'ensemble étant immobilisé et monté solidaire par vissage et clavetage.

D'autres caractéristiques et avantages de l'invention apparaîtront encore à la lecture de la description qui suit et des dessins joints, lesquels description et dessins sont donnés à titre d'exemple. Dans ces dessins :
la figure 1 représente une vue en coupe des éléments se présentant sous forme de poutres creuses devant être assemblées,
la figure 2 représente une vue en coupe de la poutre creuse de la figure 1 et munie d'un organe de positionnement,
la figure 3 représente une vue en coupe de la même poutre munie d'un organe de positionnement permettant la fixation de deux poutres,
la figure 4 représente un élément d'assemblage associé à une entretoise de manière à délimiter avec cette dernière un angle fixe prédéterminé,
la figure 5 représente une vue en coupe de deux éléments solidarisés au moyen d'un organe d'assemblage articulé dans un plan,
la figure 6 représente ce même assemblage de deux éléments en coupe en vue de dessus,
la figure 7 représente un élément d'assemblage monté solidaire d'une entretoise au moyen d'une articulation permettant un déplacement dans deux plans,
la figure 8 représente une vue en perspective éclatée d'un autre mode de réalisation de l'assemblage, et
la figure 9 représente une vue d'ensemble de l'assemblage de la figure 8.

Conformément à l'invention, les éléments nécessaires à la réalisation de l'assemblage se présentent sous forme de poutres 1 creuses, généralement en bois, et réalisées au moyen d'un assemblage de pièces en bois convenablement accolées et collées ensemble selon la technique dite du lamellé collé. Cette poutre est réalisée de manière à comporter dans sa partie centrale une partie évidée remplie au moins partiellement au moyen d'une âme de raidissement 2. La partie évidée de la poutre en lamellé-collé est réalisée après découpe d'un chapeau sur toute la longueur de la poutre par évidement de la poutre de manière à constituer une rainure de réception de l'âme de raidissement. Cette âme de raidissement est généralement constituée par un profilé métallique qui se développe à l'intérieur du corps en bois sur toute sa longueur. La poutre est ensuite reconstituée par recollage du chapeau. Ces éléments constitués par les poutres creuses sont par la suite assemblés entre eux au moyen d'organes de liaison appropriés.

On peut également, dans un autre mode de réalisation de ces poutres, réaliser lesdites poutres par collage d'éléments en bois autour de l'âme métallique selon un procédé s'apparentant à la technique du lamellé-collé.

La section de ces profilés peut être quelconque mais on travaillera généralement avec des éléments parallélépipédiques.

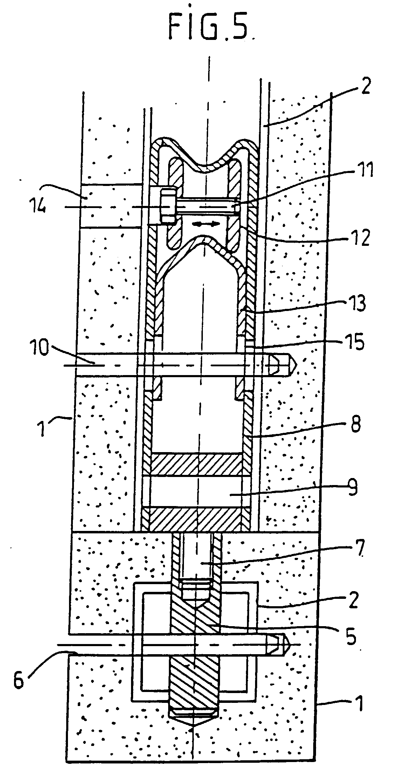

L'organe de liaison permettant l'assemblage de deux éléments 1 entre eux comprend, comme le montre la figure 5, un élément d'assemblage 8 apte à être inséré coaxialement puis fixé dans l'âme de raidissement 2 d'un premier élément 1 au moyen d'un premier organe d'immobilisation 10 approprié, un organe de positionnement 5 introduit par une des faces d'un second élément 1 de manière à déboucher à l'intérieur de l'âme de raidissement 2 du second élément et à être immobilisé à l'intérieur de cette âme 2 au moyen d'un second organe d'immobilisation 6 approprié, ledit organe de positionnement 5 étant solidaire de l'élément d'assemblage 8 au moyen d'une entretoise 7 fixée sur l'organe de positionnement 5.

Dans ce premier mode de réalisation, trois éléments interviennent pour la liaison de deux éléments 1 constitués par les poutres creuses renforcées. Ces trois éléments sont constitués par un élément d'assemblage 8, un organe de positionnement 5 solidaire de l'élément d'assemblage 8 au moyen d'une entretoise 7 qui constitue le troisième élément. L'organe de positionnement 5 peut, selon le noeud d'articulation devant être réalisé, c'est-à-dire selon le nombre de poutres devant être fixées sur un même élément, affecter un grand nombre de formes. Ce mode de réalisation va être décrit en détail ci-après.

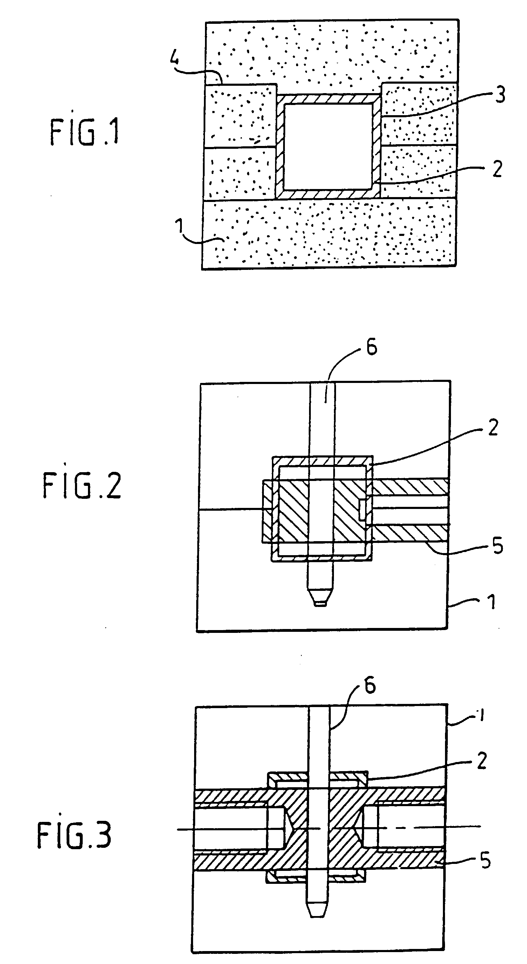

Ainsi, la figure 2 représente une vue en coupe dans laquelle l'organe de positionnement 5 est destiné à permettre la liaison de la poutre creuse 1 avec une seule poutre, alors que la figure 3 représente un organe de positionnement 5 destiné à permettre la liaison de la poutre creuse 1 avec deux poutres disposées sur deux faces parallèles de la poutre 1. Dans le cas de la figure 2, l'organe de positionnement 5 est constitué par une douille introduite au moyen d'un premier perçage traversant jusque dans l'âme de raidissement 2 de la poutre et venant traverser deux faces parallèles de cette dite âme 2. Cette douille 5 est ensuite immobilisée au moyen d'une clavette 6 également introduite dans la poutre 1 et l'âme de raidissement 2 par un deuxième perçage dont l'axe coupe l'axe du premier perçage. Il est à noter que ces perçages peuvent être réalisés au moyen d'un gabarit. Cette première douille 5 comporte un taraudage qui coopérera avec un filetage de l'entretoise.

Dans le cas de la figure 3, cette douille est destinée à recevoir deux poutres. En conséquence, les deux douilles réalisées à l'intérieur d'une seule et même pièce 5 sont disposées de part et d'autre de l'organe d'immobilisation de nouveau constitué par une clavette 6.

Bien évidemment, on pourrait avoir des montages similaires pour une fixation de poutres sur les quatre faces de la poutre 1.

L'élément d'assemblage 8 est quant à lui formé d'une chape qui peut, selon le type d'élément d'assemblage réalisé, être articulée ou non sur l'entretoise 7.

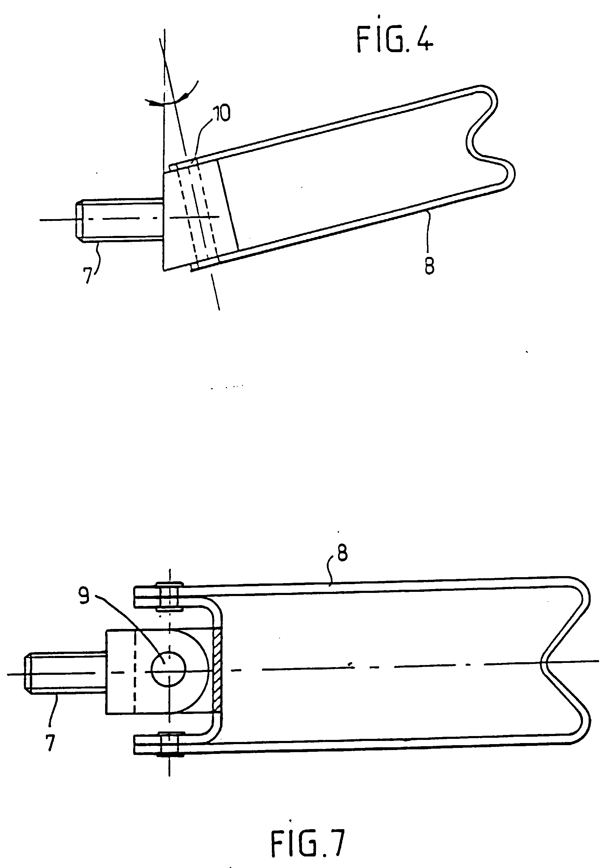

Les figures 4, 5 et 6 montrent trois modes de réalisation différents de l'élément d'assemblage 8. Dans le cas de la figure 4, l'élément d'assemblage est de configuration simple. En effet, cet organe d'assemblage 8 est monté solidaire de l'entretoise 7 et délimite avec cette dernière un angle prédéterminé qui correspond généralement à un angle utilisé de manière classique dans la construction tel que 15, 30 ou 45°.

Dans ce type de configuration, il est encore possible d'avoir deux modes de réalisation de cet élément d'assemblage. Dans un premier mode de réalisation, l'entretoise 7 et la chape 8 sont formées d'une seule pièce, la chape 8 comportant uniquement alors un perçage 10 destiné à recevoir l'organe d'immobilisation, tel qu'une clavette, monté traversant ledit perçage de manière à immobiliser l'organe d'assemblage 8 dans la poutre 1. On peut également prévoir, dans un deuxième mode de réalisation, que l'entretoise 7 soit articulée et en particulier montée à rotation sur la chape 8 au moyen d'un axe traversant le perçage 10 de manière à permettre un pivotement de la chape 8 autour de cet axe tout en conservant dans un deuxième plan un angle fixe prédéterminé.

La figure 5 représente un mode de réalisation plus complexe de l'élément d'assemblage. Dans ce cas, en effet, ce dernier comporte une chape 8 affectant une forme générale de U dont les branches enserrent une broche de verrouillage 13 animée d'un mouvement relatif axial à l'intérieur de ladite chape 8. Cette broche de verrouillage 13 est disposée à l'intérieur de la chape 8 de manière à ménager entre la tête de la broche 13 et le fond de la chape 8 un espace libre 12 à l'intérieur duquel est disposé un organe de serrage des poutres l'une sur l'autre. Cet organe de serrage peut être constitué soit par un coin de serrage 11, comme le représente la figure 5, soit par une came (non représentée).

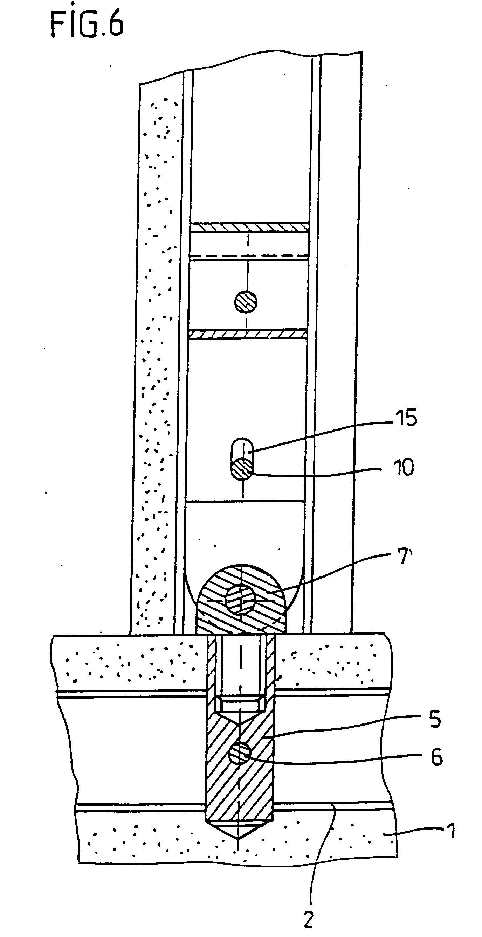

Dans le cas de l'utilisation d'un coin de serrage 11, le principe de fonctionnement est le suivant. Ce coin de serrage 11 comporte un axe susceptible d'être entraîné en rotation selon une direction perpendiculaire à l'axe longitudinal de la chape au moyen d'un organe de commande tel qu'une clé à six pans creux introduite par un perçage traversant 14 disposé en regard d'une extrémité de la tête de cet axe rotatif. Cet axe rotatif comporte en outre deux plaques coulissantes susceptibles de se déplacer le long de l'axe de manière à se rapprocher ou à s'écarter mutuellement. Lors de leur rapprochement, ces plaques coopèrent avec le fond de la chape 8 et la tête de la broche de verrouillage 13 de manière à exercer un effort de traction sur la chape permettant par réaction mutuelle d'appliquer la première et la deuxième poutres étroitement l'une contre l'autre. Bien évidemment, pour ce faire, la forme du fond de la chape 8 doit être spécifique. Il en est de même pour la tête de la broche de verrouillage 13. En effet, on notera dans la figure 5 que le fond de la chape 8 affecte une forme concave de telle sorte que, lors du rapprochement des plaques, elles entraînent la chape 8 en déplacement dans une direction identique à la direction d'introduction de la chape 8 dans l'âme de raidissement de l'élément creux. A l'inverse, la forme de la tête de la broche de verrouillage 13 est une forme convexe de telle sorte que, lorsque les plaques se rapprochent, elles entraînent un déplacement de la broche de verrouillage 13 dans une direction opposée à celle de la chape 8. La chape 8 et la broche de verrouillage 13 sont immobilisées à l'intérieur du profilé métallique au moyen d'une clavette 10 introduite par des perçages traversants disposés en regard de perçages portés par des faces parallèles de la chape 8 et de la broche de verrouillage 13, ces perçages prévus dans la broche de verrouillage et dans la chape constituant des lumières de guidage. L'entretoise 7 est, dans ce type de configuration de l'élément d'assemblage, généralement montée articulée sur cet élément d'assemblage au moyen d'un axe d'articulation qui, d'une part, traverse la tête de l'entretoise 7, d'autre part deux faces parallèles de la chape 8. Ainsi, comme le montre la figure 6, l'entretoise se présente dans ce cas sous forme d'une broche dont la tête comporte un perçage et affecte la forme générale d'oreilles ; quant à la queue de cette broche, elle est constituée par une tige filetée qui coopère avec le taraudage de l'organe de positionnement 5 constitué par une douille.

Dans un autre mode de réalisation de l'invention, non représenté, la tête de la broche constitutive de l'entretoise est montée rapportée sur la tige filetée constituant ladite broche.

Enfin, dans un dernier mode de réalisation (non représenté) de l'élément d'assemblage permettant un déplacement dans les deux plans de la deuxième poutre par rapport à la première poutre, l'élément d'assemblage est articulé sur l'entretoise au moyen d'un croisillon de manière à constituer avec ce dernier une liaison du type cardan.

On notera que, dans tous les exemples représentés, l'entretoise 7 est représentée par une broche présentant une tige équipée de perçages permettant de recevoir l'axe d'articulation de la chape 8 et une queue constituée par une tige saillante filetée qui coopère avec le taraudage de l'organe de positionnement 5.

On peut bien évidemment prévoir un grand nombre d'autres solutions pour solidariser l'entretoise 7 à l'organe de positionnement 5. L'organe de positionnement peut ainsi être constitué par une tige filetée qui coopère avec un taraudage de l'entretoise 7. On peut également envisager un verrouillage à force ou par encliquetage ou par déformation élastique de l'organe de positionnement 5 ou de l'entretoise 7 par rapport à l'autre pièce.

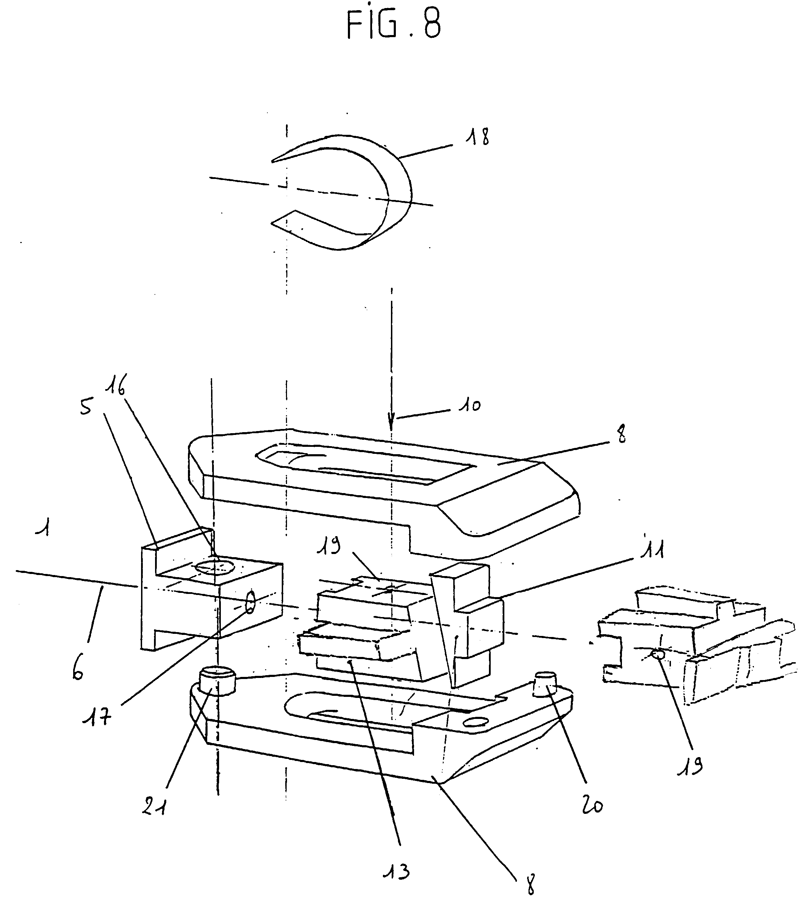

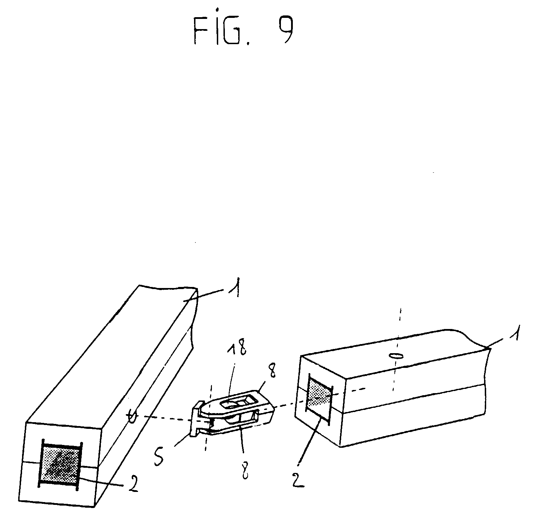

Il est également possible de prévoir un autre mode de réalisation de l'invention extrêmement simplifié qui permet en particulier la suppression de l'entretoise reliant l'organe de positionnement 5 et l'élément d'assemblage 8. Ce mode de réalisation est représenté aux figures 8 et 9 et constitue un assemblage plus universel que les assemblages décrits précédemment. Dans ce cas, l'élément d'assemblage 8 constitue de nouveau un insert affectant la forme d'un étrier et susceptible d'être inséré coaxialement puis fixé dans l'âme de raidissement 2 d'un premier élément 1 au moyen d'un premier organe d'immobilisation 10 généralement constitué par une vis. A la différence des autres modes de réalisation, les branches de cet étrier ne sont pas formées d'une seule pièce mais sont au contraire solidarisées entre elles au moyen d'au moins un organe de liaison approprié tel qu'une lame ressort 18. Un autre organe de liaison des branches de cet étrier est formé par deux plots 20 disposés en regard aux extrémités contigües des branches de l'étrier, lesdits plots disposés sur une branche pénétrant dans un évidement ménagé en regard dans la branche qui lui est opposée.

De la même manière que dans les exemples décrits ci-dessus, l'élément d'assemblage 8 formé de deux demi-étriers enserre entre ses branches un organe de verrouillage 13 animé d'un mouvement relatif à l'intérieur dudit élément de telle sorte qu'il ménage avec le fond dudit élément 8 un espace libre 12 à l'intérieur duquel peut être disposé soit un coin de serrage 11, soit une came.

Dans l'exemple représenté à la figure 8, il s'agit d'un coin de serrage stationnaire immobilisé lors de l'assemblage des demi-étriers 8. Cet organe de verrouillage 13 affecte la forme d'une noix cruciforme comportant un alésage traversant 19 susceptible de recevoir une vis de déplacement de la noix. L'introduction de la vis dans cet alésage 19 et le serrage de cette vis ont pour effet d'assurer la montée de la noix cruciforme 19 qui, par effet de coin, repousse le coin 11 en appui sur l'étrier et, ainsi, par réaction, serre fortement les deux éléments 1 formant poutre l'un contre l'autre. Le principe de fonctionnement d'un tel ensemble est donc analogue à celui décrit précédemment.

L'intérêt d'une telle conception réside dans le fait que la noix 13 et le coin de serrage 11 peuvent occuper deux positions orthogonales à l'intérieur de l'élément d'assemblage 8 pour multiplier l'accessibilité à la vis de déplacement de la noix. Les deux positions sont représentées à la figure 8. On constate ainsi que l'alésage traversant 19 peut être soit disposé en regard de deux perçages traversants ménagés dans les deux demi-étriers, soit d'un perçage traversant 19 disposé orthogonal à l'axe passant par les alésages traversants ménagés dans les deux faces dudit étrier. De ce fait, il est possible de déplacer la noix en introduisant la vis par l'une quelconque des faces de l'élément 1 à l'intérieur duquel est inséré l'organe d'assemblage 8. Il est à noter que, là encore pour simplifier la réalisation de l'ensemble, la vis de déplacement de la noix constitue généralement l'organe d'immobilisation 10 de l'élément d'assemblage 8 dans le premier élément 1. L'organe de positionnement 5 solidarisé au deuxième élément 1 et relié à l'élément d'assemblage 8 affecte une forme générale de T dans la figure 8. En effet, dans ce cas, l'organe de positionnement est constitué d'une pièce qui présente une surface d'appui venant se plaquer contre l'une des faces d'un deuxième élément 1. Cette pièce est fixée sur ledit deuxième élément 1 au moyen d'un organe d'immobilisation tel qu'une vis 6 qui traverse un alésage traversant 17 ménagé dans la branche principale du T. Les ailes du T constituent uniquement des faces d'appui de l'organe de positionnement 5 sur l'élément 1. La branche du T ou patte comporte en outre deux autres alésages 16 traversants ou non, qui coopèrent avec des organes saillants tels que des plots 21 disposés sur chacune des extrémités libres de l'étrier ou élément d'assemblage 8, l'ensemble plots et perçages formant un axe d'articulation de telle sorte que, lors de sa mise en place, l'élément d'assemblage 8 peut être ajusté angulairement par déplacement autour dudit axe de manière à obtenir une orientation appropriée des deux éléments 1.

Il est à noter que, dans ce mode de réalisation de l'organe de positionnement 5, l'organe d'immobilisation 6 de l'organe de positionnement 5 sur un deuxième élément 1 est constitué par une vis auto-taraudeuse qui traverse d'une part une paroi dudit deuxième élément 1 et au moins une face de l'âme de raidissement 2 dudit deuxième élément 1. Grâce à un tel mode de réalisation de l'invention, il est possible d'obtenir n'importe quel angle de liaison entre deux poutres 1 et d'assurer une application des deux poutres l'une contre l'autre en introduisant l'organe d'immobilisation de l'élément d'assemblage 8 par l'une quelconque des faces de la poutre à l'intérieur de laquelle est introduit coaxialement l'élément d'assemblage 8.

Bien évidemment, dans tous les modes de réalisation précités, il conviendra pour la mise en oeuvre d'un tel type de liaison de préparer les extrémités de poutres en réalisant les coupes angulaires nécessaires pour obtenir l'orientation relative des poutres entre elles choisie. Ces coupes ainsi que les perçages pourront s'effectuer au moyen de gabarits appropriés.

L'intérêt d'une telle construction est de pouvoir permettre la réalisation de constructions mixtes, type aluminium/bois, ne nécessitant aucune compétence technique, le seul travail à réaliser sur les poutres étant d'ajuster leur longueur en fonction de la construction, ce qui nécessite exclusivement l'usage d'un outil de coupe du genre scie ou analogue.

## Revendications

1. Assemblage, pour la réalisation d'ossatures porteuses ou autoportées de constructions intégrées du genre verrières ou annexes, telles que vérandas ou analogues, au moyen d'éléments se présentant sous forme de poutres (1) creuses dont la partie évidée est remplie au moins partiellement au moyen d'une âme de raidissement obtenue par au moins un profilé métallique creux (2) s'étendant à l'intérieur de cet élément essentiellement sur toute sa longueur, chaque élément étant assemblé à un autre au moyen d'un organe de liaison,
caractérisé en ce que ledit organe de liaison comprend un premier élément d'assemblage (8) apte à être inséré coaxialement puis fixé dans l'âme de raidissement (2) d'un premier élément (1) au moyen d'un premier organe d'immobilisation (10) approprié, un organe de positionnement (5) immobilisé sur, ou dans, un second élément (1) au moyen d'un second organe d'immobilisation (6) approprié qui traverse au moins une paroi du second élément (1) et au moins une face de l'âme de raidissement (2) dudit second élément (1), ledit organe de positionnement (5) étant solidarisé à, ou articulé sur, le premier élément d'assemblage (8) soit directement, soit au moyen d'une entretoise (7).

2. Assemblage selon la revendication 1,
caractérisé en ce que l'élément d'assemblage (8) est un insert affectant la forme d'un étrier, les branches de l'étrier étant formées d'une seule pièce ou solidarisées entre elles au moyen d'au moins un organe de liaison approprié.

3. Assemblage selon la revendication 2,
caractérisé en ce que l'insert formant l'élément d'assemblage (8) comporte deux faces parallèles munies d'un perçage traversant destiné à recevoir l'organe d'immobilisation (10) tel qu'une clavette introduite par un perçage ménagé sur l'une des faces de la poutre (1) et disposée en regard du perçage de l'insert (8).

4. Assemblage selon l'une des revendications 1 à 3,
caractérisé en ce que l'élément d'assemblage (8) enserre entre ses branches un organe de verrouillage (13) animé d'un mouvement relatif à l'intérieur dudit élément (8) de telle sorte qu'il ménage avec le fond dudit élément (8) un espace libre (12) à l'intérieur duquel est disposé soit un coin de serrage (11), soit une came qui coopèrent avec l'organe de verrouillage (13) lors du déplacement du coin (11), de la came ou de l'organe de verrouillage (13) pour exercer sur l'élément d'assemblage (8) un effort de traction permettant par réaction mutuelle l'application des premier et deuxième éléments (1) étroitement l'un contre l'autre.

5. Assemblage selon la revendication 4,
caractérisé en ce que l'organe de verrouillage (13) animé d'un mouvement relatif à l'intérieur dudit élément d'assemblage est une broche de verrouillage (13) qui ménage entre sa tête de broche (13) et le fond de l'élément d'assemblage (8) un espace libre (12) à l'intérieur duquel est disposé soit le coin de serrage (11), soit la came.

6. Assemblage selon la revendication 4,
caractérisé en ce que l'organe de verrouillage (13) animé d'un mouvement relatif à l'intérieur dudit élément d'assemblage (8) est une noix cruciforme comportant un alésage traversant susceptible de recevoir une vis de déplacement de la noix, ladite noix coopérant avec un coin stationnaire (11) lors de son déplacement pour assurer une immobilisation par serrage verrouillé de l'élément d'assemblage (8) dans l'élément (1) et l'application des premier et deuxième éléments (1) étroitement l'un contre l'autre.

7. Assemblage selon la revendication 6,
caractérisé en ce que la noix et le coin de serrage (11) peuvent occuper deux positions orthogonales à l'intérieur de l'élément d'assemblage (8) pour multiplier l'accessibilité à la vis de déplacement de la noix.

8. Assemblage selon l'une des revendications 4, 6 et 7,
caractérisé en ce que la vis de déplacement de la noix constitue l'organe d'immobilisation (10) de l'élément d'assemblage (8) dans le premier élément (1).

9. Assemblage selon l'une des revendications 4 et 5,
caractérisé en ce que les déplacements du coin (11) ou de la came sont obtenus par rotation d'un axe commandé au moyen d'un organe de commande tel qu'une clavette (6) introduit par un alésage traversant (14) prévu coaxial à l'axe et ménagé dans la paroi de l'élément (1).

10. Assemblage selon l'une des revendications 1 à 9,
caractérisé en ce que l'organe de positionnement (5) est une douille introduite par un perçage traversant au moins une paroi de l'élément (1) et au moins une face de l'âme de raidissement (2), cet organe de positionnement (5) étant immobilisé à l'intérieur de l'élément (1) au moyen d'un organe d'immobilisation tel qu'une clavette (6) introduit par un deuxième perçage traversant dont l'axe coupe l'axe du premier perçage.

11. Assemblage selon l'une des revendications 1 à 10,
caractérisé en ce que l'organe de positionnement (5) présente des moyens de fixation complémentaires de ceux d'une entretoise (7) de manière à immobiliser l'entretoise (7) sur, ou dans, l'organe de positionnement (5).

12. Assemblage selon l'une des revendications 2 à 11,
caractérisé en ce que l'entretoise (7) est constituée par une broche présentant une tige filetée ou taraudée coopérant avec un taraudage ou filetage de l'organe de positionnement (5) et une tête sur laquelle est articulée, au moyen d'un axe transversal (9) ou d'un croisillon, l'organe d'assemblage (8), cette articulation autorisant une orientation prédéterminée de l'organe d'assemblage (8) et par suite l'angle d'ajustement l'un contre l'autre des deux éléments réunis ensemble par l'organe de liaison.

13. Assemblage selon l'une des revendications 2 à 12,
caractérisé en ce que l'entretoise est constituée par une broche présentant une tige filetée ou taraudée qui, à une de ses extrémités, coopère avec un taraudage ou filetage de l'organe de positionnement (5) et à son autre extrémité est montée d'une seule pièce ou rapportée sur l'élément d'assemblage (8), l'axe transversal de l'élément d'assemblage (8), confondu éventuellement avec son axe d'articulation et l'axe longitudinal de l'entretoise, formant un angle fixe prédéterminé généralement égal à 45°, 60° ou 75°.

14. Assemblage selon l'une des revendications 1 à 8,
caractérisé en ce que l'organe de positionnement (5) est une pièce présentant une surface d'appui sur une face du deuxième élément (1) et comprenant une patte sur laquelle est fixé ou articulé l'élément d'assemblage (8) inséré dans l'âme de raidissement (2) du premier élément (1) susceptible d'être accolé audit deuxième élément (1), cette patte comportant un alésage traversant (17) susceptible de recevoir l'organe d'immobilisation (6) de l'organe de positionnement (5) dans le premier élément (1), cet organe d'immobilisation (6) traversant au moins une paroi du deuxième élément (1) et au moins une face de l'âme de raidissement (2) dudit deuxième élément (1).

15. Assemblage selon l'une des revendications 1 à 14,
caractérisé en ce que l'élément d'assemblage (8) affectant la forme d'un étrier comporte aux extrémités libres de chacune de ses branches sur les faces intérieures de ces dernières un élément saillant tel qu'un plot (21) susceptible d'être monté à pivotement à l'intérieur d'un perçage (16) ménagé sur la patte de l'organe de positionnement (5) pour permettre un positionnement angulaire des premier et deuxième éléments (1).

## Patentansprüche

1. Anordnung zum Bilden von tragenden oder selbsttragenden Tragwerken für Konstruktionen, die nach Art von Glasdachkonstruktionen eingebaut sind oder die angebaut sind, beispielsweise Verandas oder dergleichen, mittels Elementen, die die Form von Hohlbalken (1) haben, deren ausgesparter Teil wenigstens teilweise von einem Versteifungskern eingenommen ist, der aus wenigstens einem metallischen Hohlprofil (2) besteht, das sich im Inneren dieses Elementes im wesentlichen über seine gesamte Länge erstreckt, wobei jedes Element mittels eines Verbindungsorganes mit einem anderen verbunden ist,
dadurch gekennzeichnet, daß das Verbindungsorgan aufweist ein erstes Verbindungselement (8), das geeignet ist, koaxial in den Versteifungskern (2) eines ersten Elementes (1) eingeführt und dann in diesem mittels eines ersten geeigneten Festsetzorganes (10) befestigt zu werden, ein Positionierorgan (5) , das an oder in einem zweiten Element (1) festgesetzt ist mittels eines zweiten geeigneten Festsetzorganes (6), das sich durch wenigstens eine Wandung des zweiten Elementes (1) und wenigstens eine Fläche des Versteifungskerns (2) des zweiten Elementes (1) erstreckt, wobei das Positionierorgan (5) direkt oder mittels eines Zwischenstücks (7) fest mit dem ersten Verbindungselement (8) verbunden oder gelenkig an diesem angeordnet ist.

2. Anordnung nach Anspruch 1,
dadurch gekennzeichnet, daß das Verbindungselement (8) ein Einsatz ist, der die Form eines Bügels aufweist, wobei die Schenkel des Bügels einstückig geformt oder mittels wenigstens eines geeigneten Verbindungsorganes miteinander verbunden sind.

3. Anordnung nach Anspruch 2
dadurch gekennzeichnet, daß der das Verbindungselement (8) bildende Einsatz zwei parallele Flächen aufweist, die mit einer durchgehenden Bohrung versehen sind, die dafür vorgesehen ist, das Festsetzorgan (10), beispielsweise einen Dübel, aufzunehmen, das durch eine in einer der Flächen des Trägers (1) gebildete und gegenüber der Bohrung des Einsatzes (8) angeordnete Bohrung eingeführt wird.

4. Anordnung nach einem der Ansprüche 1 bis 3,
dadurch gekennzeichnet, daß das Verbindungselement (8) zwischen seinen Schenkeln ein in eine Bewegung relativ zum Inneren des Elementes (8) versetzbares Verriegelungsorgan (13) derart aufnimmt, daß es mit dem Boden des Elementes (8) einen freien Raum (12) begrenzt, in dessen Inneren ein Spannelement (11) oder ein Nocken angeordnet ist, das bzw. der mit dem Verriegelungsorgan (13) beim Ausrücken des Spannelementes (11), des Nockens oder des Verriegelungsorganes (13) zusammenwirkt, um auf das Verbindungselement (8) eine Zugkraft auszuüben, die durch gegenseitige Reaktion das enge Anbringen des ersten und des zweiten Elements (1) aneinander zu ermöglichen.

5. Anordnung nach Anspruch 4,
dadurch gekennzeichnet, daß das in eine Bewegung relativ zum Inneren des Verbindungselementes versetzbare Verriegelungsorgan (13) ein Verriegelungsdorn (13) ist, der zwischen seinem Kopf des Dornes (13) und dem Boden des Verbindungselementes (8) einen freien Raum (12) begrenzt, in dessen Inneren das Spannelement (11) oder der Nocken angeordnet ist.

6. Anordnung nach Anspruch 4,
dadurch gekennzeichnet, daß das in eine Bewegung relativ zum Inneren des Verbindungselementes (8) versetzbare Verriegelungsorgan (13) eine kreuzförmige Nuß ist, die eine durchgehende Bohrung aufweist, die geeignet ist, eine Schraube zum Verschieben der Nuß aufzunehmen, wobei die Nuß bei ihrer Verschiebung mit einem ortsfesten Keil (11) zusammenwirkt, um eine Festsetzung des Verbindungselementes (8) in dem Element (1) durch Spannverriegelung und das enge Anbringen des ersten und des zweiten Elements (1) aneinander sicherzustellen.

7. Anordnung nach Anspruch 6,
dadurch gekennzeichnet, daß die Nuß und der Spannkeil (11) zwei zueinander senkrechte Positionen im Inneren des Verbindungselementes (8) einnehmen können, um die Zugänglichkeit zu der Schraube zum Verschieben der Nuß zu erhöhen.

8. Anordnung nach einem der Ansprüche 4, 6 und 7,
dadurch gekennzeichnet, daß die Schraube zum Verschieben der Nuß das Organ (10) zum Festsetzen des Verbindungselementes (8) in dem ersten Element (1) bildet.

9. Anordnung nach einem der Ansprüche 4 und 5 ,
dadurch gekennzeichnet, daß die Verschiebungen des Spannelementes (11) oder des Nockens erzielt werden durch Drehung einer Achse, die mittels eines Betätigungsorganes, beispielsweise eines Keiles (6), betätigt wird, das durch eine durchgehende Bohrung (14) eingeführt wird, die zu der Achse koaxial angeordnet und in der Wandung des Elementes (1) gebildet ist.

10. Anordnung nach einem der Ansprüche 1 bis 9,
dadurch gekennzeichnet, daß das Positionierorgan (5) eine Hülse ist, die durch eine Bohrung eingeführt wird, die sich durch wenigstens eine Wandung des Elementes (1) und wenigstens eine Fläche des Versteifungskernes (2) erstreckt, wobei dieses Positionierorgan (5) im Inneren des Elementes (1) festgesetzt ist mittels eines Festsetzorganes, beispielsweise eines Dübels (6), das durch eine zweite durchgehende Bohrung eingeführt wird, deren Achse die Achse der ersten Bohrung schneidet.

11. Anordnung nach einem der Ansprüche 1 bis 10,
dadurch gekennzeichnet, daß das Positionierorgan (5) Befestigungsmittel aufweist, die zu denen eines Zwischenstückes (7) komplementär ausgebildet sind, um das Zwischenstück (7) an oder in dem Positionierorgan (5) festzusetzen.

12. Anordnung nach einem der Ansprüche 2 bis 11,
dadurch gekennzeichnet, daß das Zwischenstück (7) durch einen Dorn gebildet ist, der eine mit Außengewinde oder Innengewinde versehene Stange, die mit einem Innengewinde oder einem Außengewinde des Positionierorganes (5) zusammenwirkt, und einen Kopf aufweist, an dem mittels einer Querachse (9) oder eines Kreuzzapfens das Verbindungselement (8) gelenkig gelagert ist, wobei die gelenkige Lagerung eine vorbestimmte Orientierung des Verbindungsorganes (8) und demzufolge die Winkelausrichtung der durch das Verbindungsorgan miteinander verbundenden zwei Elemente zueinander ermöglicht.

13. Anordnung nach einem der Ansprüche 2 bis 12,
dadurch gekennzeichnet, daß das Zwischenstück durch einen Dorn gebildet ist, der eine mit einem Innengewinde oder Außengewinde versehene Stange aufweist, die an einem ihrer Enden mit einem Außengewinde oder Innengewinde des Positionierorganes (5) zusammenwirkt und an ihrem anderen Ende mit dem Verbindungselement (8) einstückig verbunden oder an dieses angesetzt ist, wobei die Querachse des Verbindungselementes (8), die eventuell mit seiner Schwenkachse zusammenfällt, mit der Längsachse des Zwischenstücks einen festen, vorbestimmten Winkel bildet, der im allgemeinen 45°, 60° oder 75° entspricht.

14. Anordnung nach einem der Ansprüche 1 bis 8,
dadurch gekennzeichnet, daß das Positionierorgan (5) ein Teil ist, das eine Fläche zur Anlage an eine Fläche des zweiten Elementes (1) und eine Lasche aufweist, an der das Verbindungselement (8) befestigt oder gelenkig gelagert ist, das in den Versteifungskern (2) des ersten Elementes (1) eingefügt ist, das geeignet ist, an das zweite Element (1) angefügt zu werden, wobei diese Lasche eine durchgehende Bohrung (17) aufweist, die geeignet ist, das Festsetzorgan (6) des Positionierorgans (5) in dem ersten Element (1) aufzunehmen, wobei sich dieses Festsetzorgan (6) durch wenigstens eine Wandung des zweiten Elementes (1) und durch wenigstens eine Fläche des Versteifungskernes (2) des zweiten Elementes (1) erstreckt.

15. Anordnung nach einem der Ansprüche 1 bis 14,
dadurch gekennzeichnet, daß das Verbindungselement (8), das die Form eines Einsatzes hat, an den freien Enden jedes seiner Schenkel an den Innenflächen letzterer ein vorspringendes Element, beispielsweise einen Ansatz (21) aufweist, der geeignet ist, drehbar im Inneren einer Bohrung (16) angeordnet zu werden, die in der Lasche des Positionierorgans (5) gebildet ist, um eine Winkelpositionierung des ersten und zweiten Elementes zu ermöglichen.

## Claims

1. Assembly for the formation of load-bearing or self-supporting frameworks of integral structures of the glazed or annex type, such as verandas or the like, by means of elements in the form of hollow beams (1) of which the hollow part is at least partially filled by a reinforcing core provided by at least one hollow metal profile (2) extending inside this element essentially over its whole length, each element being assembled with another by means of a connecting member, characterised in that the said connecting member comprises a first assembling element (8) able to be inserted coaxially and then fixed in the reinforcing core (2) of a first element (1) by means of a suitable first immobilising member (10), a positioning member (5) fixed on or in a second element (1) by means of a suitable second immobilising member (6) which passes through at least one wall of the second element (1) and at least one face of the reinforcing core (2) of the said second element (1), the said positioning member (5) being firmly fixed to or articulated on the first assembling element (8) either directly or by means of a tie (7).

2. Assembly according to claim 1, characterised in that the assembling element (8) is an insert in the form of a stirrup, the limbs of the stirrup being formed from a single piece or firmly fixed to each other by means of at least one suitable connecting member.

3. Assembly according to claim 2, characterised in that the insert forming the assembling element (8) comprises two parallel faces provided with a through-going hole intended to receive the immobilising member (10) such as a pin introduced by way of a hole provided in one of the faces of the beam (1) and disposed facing the hole in the insert (8).

4. Assembly according to one of claims 1 to 3, characterised in that the assembling element (8) traps between its limbs a locking member (13) which moves with respect to the inside of the said element (8) so that it provides, with respect to the base of the said element (8), a free space (12) inside which is disposed either a tightening wedge (11) or a cam which cooperates with the locking member (13) during displacement of the wedge (11), the cam or the locking member (13) to exert on the assembling element (8) a traction force making it possible by mutual reaction for the first and second elements (1) to be applied tightly one against the other.

5. Assembly according to claim 4, characterised in that the locking member (13) which moves with respect to the inside of the said assembling element is a locking pin (13) which, between its pin head (13) and the base of the assembling element (8) provides a free space (12) inside which is disposed either the tightening wedge (11) or the cam.

6. Assembly according to claim 4, characterised in that the locking member (13) which moves with respect to the inside of the said assembling element (8) is a cross-shaped block comprising a through-going bore able to receive a screw for displacing the block, the said block cooperating with a stationary wedge (11) when it is displaced in order to ensure by locked wedging that the assembling element (8) is immobilised in the element (1) and that the first and second elements (1) are applied tightly one against the other.

7. Assembly according to claim 6, characterised in that the block and the tightening wedge (11) can occupy two orthogonal positions inside the assembling element (8) in order to increase the accessibility to the screw for displacing the block.

8. Assembly according to one of claims 4, 6 and 7, characterised in that the screw for displacing the block constitutes the member (10) for immobilising the assembling element (8) in the first element (1).

9. Assembly according to one of claims 4 and 5, characterised in that the wedge (11) or the cam are displaced by rotating an axle controlled by means of a control member such as a pin (6) introduced by way of a through-going bore (14) provided coaxially to the axle and arranged in the wall of the element (1).

10. Assembly according to one of claims 1 to 9, characterised in that the positioning member (5) is a dowel introduced by way of a hole passing through at least one wall of the element (1) and at least one face of the reinforcing core (2), this positioning member (5) being immobilised inside the element (1) by means of an immobilising member such as a pin (6) introduced by way of a second through-going hole of which the axis intersects the axis of the first hole.

11. Assembly according to one of claims 1 to 10, characterised in that the positioning member (5) has fixing means complementary to those of a tie (7) so as to immobilise the tie (7) on or in the positioning member (5).

12. Assembly according to one of claims 2 to 11, characterised in that the tie (7) is comprised of a pin with a threaded or tapped rod cooperating with tapping or threading on the positioning member (5) and a head on which, by means of a transverse axle (9) or cross pin, the assembling element (8) is articulated, this articulation permitting a predetermined orientation of the assembling element (8) and consequently the angle of adjustment with respect to each other of the two elements connected by the connecting member.

13. Assembly according to one of claims 2 to 12, characterised in that the tie is comprised of a pin with a threaded or tapped rod which, at one of its ends, cooperates with tapping or threading on the positioning member (5) and at its other end is mounted as a single piece or connected to the assembling element (8), the transverse axis of the assembling element (8), possibly coinciding with its articulation axis, and the longitudinal axis of the tie forming a fixed predetermined angle generally equal to 45°, 60° or 75°.

14. Assembly according to one of claims 1 to 8, characterised in that the positioning member (5) is a piece having a surface bearing on a face of the second element (1) and comprising a tab on which is fixed or articulated the assembling element (8) which is inserted into the reinforcing core (2) of the first element (1) able to be attached to the said second element (1), this tab comprising a through-going bore (17) able to receive the member (6) for immobilising the positioning member (5) in the first element (1), this immobilising member (6) passing through at least one wall of the second element (1) and at least one face of the reinforcing core (2) of the said second element (1).

15. Assembly according to one of claims 1 to 14, characterised in that the assembling element (8) being in the form of a stirrup comprises, at the free ends of each of its limbs and on the inner faces of the said limbs, a projecting element such as a stud (21) able to be pivotally mounted inside a hole (16) provided on the tab of the positioning member (5) to permit the first and second elements (1) to be positioned angularly.
